# EUROPEAN PATENT APPLICATION

(11) **EP 3 065 074 A1**
(43) Date of publication of application: **07.09.2016**
(21) Application number: 15800706.2
(22) Date of filing: 17.08.2015
(51) Int. Cl.: G06F 21/32

(54) **FINGERPRINT AUTHENTICATION METHOD AND DEVICE, INTELLIGENT TERMINAL, AND COMPUTER STORAGE MEDIUM**

(30) Priority: 08.01.2015 CN 201510009630
(71) Applicant: Baidu Online Network Technology (Beijing) Co., Ltd., Beijing 100085 (CN)
(72) Inventor: DONG, Yang, Beijing 100085 (CN); CHEN, Bujiao, Beijing 100085 (CN)
(74) Representative: Romano, Giuseppe
(86) International application number: PCT/CN2015/087218
(87) International publication number: WO 2016/110101

(57) **Abstract**

The present disclosure provides a method of and an apparatus for authenticating a fingerprint, a smart terminal and a computer storage medium. The method includes: storing a binding relationship between first user fingerprint information and user authentication information into a safe storage area of a smart terminal in advance, collecting second user fingerprint information during an authentication of a user identity; matching the second user fingerprint information with the first user fingerprint information in the safe storage area, determining the user authentication information corresponding to the first user fingerprint information matched with the second user fingerprint information; sending the user authentication information to a server to authenticate the user identity. The present disclosure may simplify the user operation, enhance the security of the authentication, and thus may be applied in a scene with high security requirement, such as payment authentication.

## Description

### CROSS-REFERENCE TO RELATED APPLICATION

This application claims priority to and benefits of Chinese Patent Application Serial No. 201510009630.X, filed with the State Intellectual Property Office of P. R. China on January 8, 2015, the entire content of which is incorporated herein by reference.

### FIELD

The present disclosure relates to a field of computer application technology, and more particularly to a method of authenticating a fingerprint, an apparatus for authenticating a fingerprint, a smart terminal and a computer storage medium.

### BACKGROUND

With a continuous development and use of smart terminals, such as smart mobile phone, a panel computer, a smart TV and the like, people increasingly use the smart terminal apparatuses for trading or acquiring services. However, the identity authentication is inevitable. For example, during an online transaction performed by the user, it is required to submit the payment information of the user to the server to achieve the payment function. Also for example, when the user acquires certain service online, it is required to submit the account information of the user to the server to achieve the login and acquire the service. In the related art, however, the user is required to input the authentication information manually for most authentication procedures, which is troublesome and also easy to reveal the account information, thus leading to a poor security.

### SUMMARY

In light of the problems described above, the present disclosure provides a method of authenticating a fingerprint, an apparatus for authenticating a fingerprint, a smart terminal and a computer storage medium, so as to simplify the user operation and enhance the security.

The specific technical solution is as follows.

A method of authenticating a fingerprint is provided, in which a binding relationship between first user fingerprint information and user authentication information is pre-stored into a safe storage area of a smart terminal, and the method includes: collecting second user fingerprint information during an authentication of a user identity; matching the second user fingerprint information with the first user fingerprint information in the safe storage area and determining the user authentication information corresponding to the first user fingerprint information matched with the second user fingerprint information; and sending the user authentication information to a server to authenticate the user identity.

According to a preferred embodiment, the user authentication information is payment information, the payment information includes at least one of an account number and a password, or the payment information includes a random series generated by the server for a user; collecting second user fingerprint information during an authentication of a user identity, includes: collecting the second user fingerprint information after acquiring order information from the server or after receiving a request for acquiring the payment information from the server.

According to a preferred embodiment, the smart terminal is divided into an ordinary execution environment and a safe execution environment, and the safe storage area is established in the safe execution environment.

According to a preferred embodiment, a binding relationship between first user fingerprint information and user authentication information is pre-stored into a safe storage area of a smart terminal by steps of:
acquiring the first user fingerprint information, switching from an ordinary mode to a safety monitoring mode, storing the first user fingerprint information into the safe storage area in the safe execution environment, and switching back to the ordinary mode; and acquiring the user authentication information, switching from the ordinary mode to the safety monitoring mode, storing the user authentication information into the safe storage area in the safe execution environment and binding the first user fingerprint information to the user authentication information; or
acquiring the user authentication information, switching from an ordinary mode to a safety monitoring mode, storing the user authentication information into the safe storage area in the safe execution environment, and switching back to the ordinary mode; acquiring the first user fingerprint information, switching from the ordinary mode to the safety monitoring mode, storing the first user fingerprint information into the safe storage area in the safe execution environment and binding the first user fingerprint information to the user authentication information.

According to a preferred embodiment, after collecting the second user fingerprint information during an authentication of a user identity, the method further includes: switching from the ordinary mode to the safety monitoring mode, and in the safe execution environment, matching the second user fingerprint information with the first user fingerprint information in the safe storage area and determining the user authentication information corresponding to the first user fingerprint information matched with the second user fingerprint information; and switching from the safety monitoring mode back to the ordinary mode and sending the user authentication information to the server in the ordinary execution environment.

According to a preferred embodiment, a fingerprint input interface is provided to the user and the first user fingerprint information is acquired via the fingerprint input interface when acquiring the first user fingerprint information, and the fingerprint input interface is provided to the user and the second user fingerprint information is acquired via the fingerprint input interface when collecting the second user fingerprint information; when acquiring the user authentication information, an authentication information input interface is provided to the user and the user authentication information is acquired via the authentication information input interface.

According to a preferred embodiment, storing the first user fingerprint information into the safe storage area includes: extracting a first fingerprint characteristic from the first user fingerprint information, and storing the first fingerprint characteristic into the safe storage area; binding the first user fingerprint information to the user authentication information includes: binding the first fingerprint characteristic to the user authentication information; and matching the second user fingerprint information with the first user fingerprint information in the safe storage area includes: extracting a second fingerprint characteristic from the second user fingerprint information, and matching the second fingerprint characteristic with the first fingerprint characteristic in the safe storage area.

According to a preferred embodiment, the user authentication information is encrypted to obtain encrypted user authentication information before the user authentication information is stored into the safe storage area; and the encrypted user authentication information is decrypted after the encrypted user authentication information corresponding to the first user fingerprint information matched with the second user fingerprint information is determined.

According to a preferred embodiment, steps executed in the safe execution environment are implemented by calling an application programming interface provided by a Trustzone technology.

Further, an apparatus for authenticating a fingerprint is provided. The apparatus includes: a collecting module, a managing module, a matching module and an authenticating module; in which the collecting module is configured to collect first user fingerprint information and user authentication information and provide the first user fingerprint information and the user authentication information to the managing module during a binding period; and to collect second user fingerprint information and provide the second user fingerprint information to the matching module during an authenticating period; the managing module is configured to store a binding relationship between the first user fingerprint information and the user authentication information provided by the collecting module into a safe storage area of a smart terminal during the binding period; the matching module is configured to match the second user fingerprint information provided by the collecting module with the first user fingerprint information in the safe storage area, to determine the user authentication information corresponding to the first user fingerprint information matched with the second user fingerprint information, and to provide the user authentication information to the authenticating module; and the authenticating module is configured to send the user authentication information provided by the matching module to a server to authenticate a user identity.

According to a preferred embodiment, the user authentication information is payment information, the payment information includes at least one of an account number and a password, or the payment information includes a random series generated by the server for a user; the collecting module is configured to collect the second user fingerprint information after acquiring order information from the server or after receiving a request for acquiring the payment information from the server, during the authenticating period; and the collecting module and the authenticating module are disposed in a payment client.

According to a preferred embodiment, the smart terminal is divided into an ordinary execution environment and a safe execution environment, and the safe storage area is established in the safe execution environment.

According to a preferred embodiment, the apparatus further includes a monitoring module. The monitoring module is configured to switch the apparatus from an ordinary mode to a safety monitoring mode after the collecting module collects the first user fingerprint information during the binding period; to switch the apparatus back to the ordinary mode after receiving a trigger from the managing module; and to switch the apparatus from the ordinary mode to the safety monitoring mode after the collecting module collects the user authentication information; the managing module is configured to store the first user fingerprint information into the safe storage area in the safe execution environment, to trigger the monitoring module; to store the user authentication information into the safe storage area in the safe execution environment, to bind the first user fingerprint information to the user authentication information, and to trigger the monitoring module;
or
the monitoring module is configured to switch the apparatus from an ordinary mode to a safety monitoring mode after the collecting module collects the user authentication information during the binding period; to switch the apparatus back to the ordinary mode after receiving a trigger from the managing module; and to switch the apparatus from the ordinary mode to the safety monitoring mode after the collecting module collects the first user fingerprint information; the managing module is configured to store the user authentication information into the safe storage area in the safe execution environment, to trigger the monitoring module; to store the first user fingerprint information into the safe storage area in the safe execution environment, to bind the first user fingerprint information to the user authentication information, and to trigger the monitoring module.

According to a preferred embodiment, the monitoring module is further configured to switch the apparatus from the ordinary mode to the safety monitoring mode after the collecting module collects the second user fingerprint information during the authenticating period; and to switch the apparatus from the safety monitoring mode back to the ordinary mode after receiving a trigger from the matching module; the matching module is further configured to trigger the monitoring module after matching the second user fingerprint information with the first user fingerprint information in the safe storage area in the safe execution environment; the authenticating module is further configured to send the user authentication information provided by the matching module to the server in the ordinary execution environment.

According to a preferred embodiment, the collecting module is configured to provide a fingerprint input interface to the user and to acquire the first user fingerprint information via the fingerprint input interface when collecting the first user fingerprint information; to provide the fingerprint input interface to the user and to acquire the second user fingerprint information via the fingerprint input interface when collecting the second user fingerprint information; to provide an authentication information input interface to the user and to acquire the user authentication information via the authentication information input interface, when acquiring the user authentication information.

According to a preferred embodiment, the apparatus further includes a characteristic extracting module, configured to extract a first fingerprint characteristic from the first user fingerprint information collected by the collecting module and extract a second fingerprint characteristic from the second user fingerprint information collected by the collecting module, and to provide the first fingerprint characteristic to the managing module and provide the second fingerprint characteristic to the matching module. The managing module is configured to bind the first user fingerprint information to the user authentication information by steps of: storing the first fingerprint characteristic provided by the characteristic extracting module into the safe storage area, and binding the first fingerprint characteristic to the user authentication information. The matching module is configured to match the second user fingerprint information with the first user fingerprint information in the safe storage area by steps of: matching a second fingerprint characteristic provided by the characteristic extracting module with the first fingerprint characteristic in the safe storage area, and determining the user authentication information corresponding to the first fingerprint characteristic matched with the second fingerprint characteristic.

According to a preferred embodiment, the managing module is further configured to encrypt the user authentication information, before the user authentication information is stored into the safe storage area; and the matching module is further configured to decrypt the user authentication information, after the user authentication information corresponding to the first user fingerprint information matched with the second user fingerprint information is determined.

According to a preferred embodiment, the monitoring module, each of the managing module and the matching module is disposed in the safe execution environment, and is called by the client via an application programming interface provided by a Trustzone technology.

A smart terminal is provided, including: one or more processors; a memory having one or more programs stored therein. When executed by the one or more processors, the one or more programs cause the one or more processors to: collect second user fingerprint information during an authentication of a user identity; match the second user fingerprint information with first user fingerprint information in a safe storage area of a smart terminal and determine user authentication information corresponding to the first user fingerprint information matched with the second user fingerprint information; and send the user authentication information to a server to authenticate the user identity. A binding relationship between the first user fingerprint information and the user authentication information is pre-stored in the safe storage area.

A non-transitory computer storage medium is provided. The computer storage medium has one or more programs stored therein. When executed by a smart terminal, the one or more programs cause the terminal to: collect second user fingerprint information during an authentication of a user identity; match the second user fingerprint information with first user fingerprint information in a safe storage area of the smart terminal, determine user authentication information corresponding to the first user fingerprint information matched with the second user fingerprint information; and send the user authentication information to a server to authenticate the user identity. A binding relationship between the first user fingerprint information and the user authentication information is pre-stored in the safe storage area.

It can be seen from the technical solution above, by binding the user fingerprint information with the user authentication information, it may complete the authentication of the user identity by only inputting the fingerprint information of the user during the authenticating period, without inputting the authentication information manually, thus simplifying the user operation. In addition, since the binding relationship is stored in the safe storage area of the terminal, the binding relationship cannot be acquired easily and freely, thus improving a security.

### BRIEF DESCRIPTION OF THE DRAWINGS

Fig. 1 is a block diagram of a system on which an embodiment of the present disclosure is based;
Fig. 2 is a flow chart of a primary method according to an embodiment of the present disclosure;
Fig. 3 is a schematic diagram showing a fingerprint input region according to an embodiment of the present disclosure;
Fig. 4 is a schematic diagram showing an authentication information input region according to an embodiment of the present disclosure;
Fig. 5 is a flow chart of a fingerprint payment method according to an embodiment of the present disclosure; and
Fig. 6 is a block diagram of an apparatus according to an embodiment of the present disclosure.

### DETAILED DESCRIPTION

In order to clarify the purpose, the technical solution and the advantages of the present disclosure, the present disclosure will be described below in detail with reference to drawings and specific embodiments.

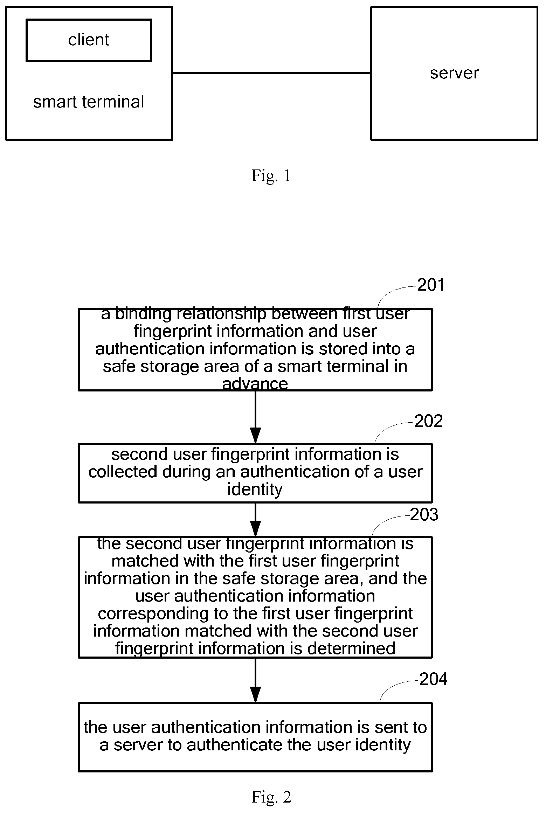

Fig. 1 is a block diagram of a system on which an embodiment of the present disclosure is based. As shown in Fig. 1, the system on which the present disclosure is based primarily consists of a smart terminal and a server. There may be one or more servers, which are configured to process the authentication of a user identity, to acquire user authentication information provided by the smart terminal during an authentication of a user identity, and to authenticate the user identity based on the user authentication information. The smart terminal includes, but is not limited to, a smart mobile phone, a PC (Personal Computer), a PDA (Personal Digital Assistant), a POS (Point of Sales) machine, a smart TV, etc. A client, which interacts with the server so as to complete the authentication of the user identity authentication, is installed and runs on the smart terminal.

The server and the smart terminal both contain certain essential components in structure, such as a bus, a processing system, a storing system, one or more input/output systems, a communication interface. The bus may include one or more wires for implementing communications between respective components in the server or the smart terminal. The processing system includes various processors or microprocessors for executing instructions and processing processes or threads. The storing system may include a dynamic memory (such as a random access memory (RAM) for storing dynamic information), a static memory (such as a read only memory (ROM) for storing static information), and a bulk memory including a magnetic or optical recording medium and a corresponding driver. The input system is configured to input information to the server or the terminal apparatus (such as a keyboard, a mouse, a stylus, a voice recognition system or a biological measurement system) by the user. The output system includes a display, a printer, a loudspeaker and the like for outputting information. The communication interfaces are configured to make the server or the terminal apparatus communicate with other systems. The communication interfaces may be connected to a network via a wired or wireless connection or an optical connection, such that the client and the server may communicate with each other via the network. The network may include a local area network (LAN), a wide area network (WAN), a telephone network (e.g., public switched telephone network (PSTN)), an enterprise internal, an internet or a combination thereof.

The server and the smart terminal both contain operating system software for managing a system resource or controlling a running of other program, and application software for implementing specific functions.

Fig. 2 is a flow chart of a primary method according to an embodiment of the present disclosure. As shown in Fig. 2, the method may include following steps.

In step 201, a binding relationship between first user fingerprint information and user authentication information is stored into a safe storage area of a smart terminal in advance.

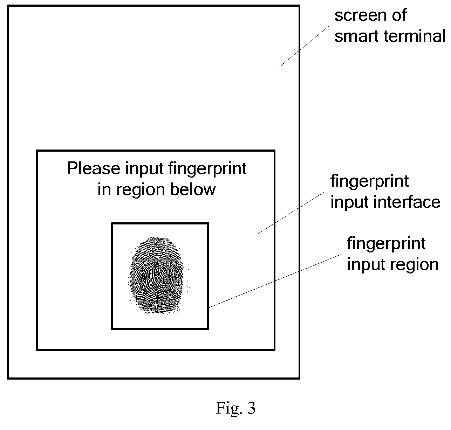

In this step, the first user fingerprint information and the user authentication information inputted by the user are collected in advance, and then the binding relationship therebetween is stored into the safe storage area of the smart terminal. Firstly, a fingerprint input interface (as shown in Fig. 3) is provided to the user and the first user fingerprint information is acquired via the fingerprint input interface. In this embodiment of the present disclosure, there is a fingerprint sensor embedded in the smart terminal, and the sensor may be a chip, such as an optical chip, a thermalsense chip, a capacitance chip, a piezoelectric capacitance chip, a piezoelectric resistance chip, etc. When collecting the first user fingerprint information, a UI prompt indicating the input of fingerprint may be popped up. The user puts his or her finger into a fingerprint input region, and the fingerprint sensor may collect the first user fingerprint information from this region.

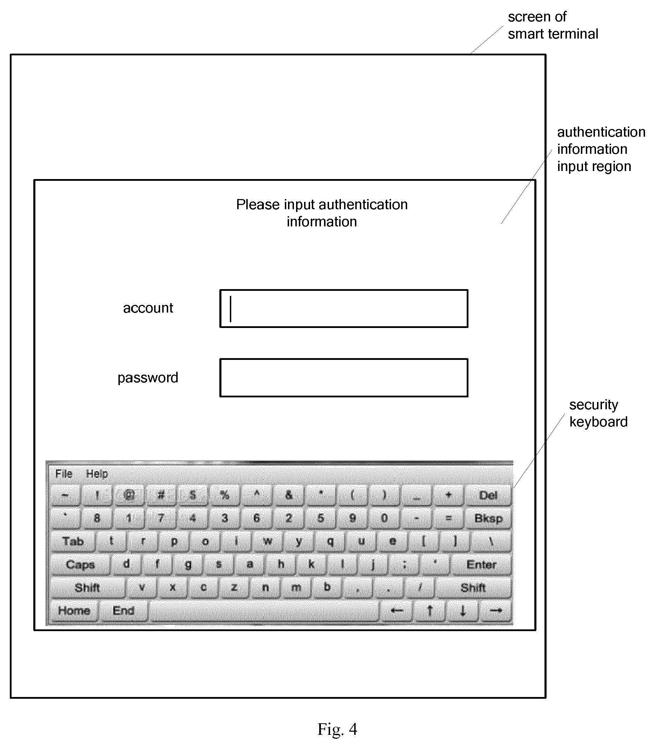

Then, the client provides an authentication information input interface to the user. Preferably, the authentication information input interface may include a virtual keyboard, preferably, a security keyboard may be used to ensure a security of inputting the authentication information. The user may input the authentication information into the information input region as shown in Fig. 4. The authentication information includes at least one of an account number and a password.

Sure, the authentication information input interface may be provided to the user firstly to acquire the user authentication information, and then the fingerprint input interface may be provided to the user to acquire the first user fingerprint information.

After the user fingerprint information is acquired, a first fingerprint characteristic of the first user fingerprint information may be extracted. The first fingerprint characteristic may be in a vector form. A binding relationship between the first fingerprint characteristic and the user authentication information is stored into the safe storage area.

In addition, in order to further ensure the security, the user authentication information may be encrypted and then bound and stored. The secret key for encrypting is only known by the client.

In this embodiment of the present disclosure, in order to ensure the security of the information storage, the binding relationship between the first user fingerprint information and the user authentication information is stored into the safe storage area of the smart terminal. In this case, the smart terminal may be divided into an ordinary execution environment and a safe execution environment with the Trustzone technology or the like, and the safe storage area is established in the safe execution environment. A data processing and storage requiring the security assurance are completed in the safe execution environment. For example, the collection of the first user fingerprint information and the acquirement of the user authentication information are executed in the ordinary execution environment, while the extraction and storage of the first fingerprint characteristic, the encryption and storage of the user authentication information, and the binding of the first fingerprint characteristic to the user authentication information are executed in the safe execution environment.

The Trustzone technology provides a solution with low cost. A dedicated security core is added into a system-on-chip (SoC), and an access control manner constructed by hardware assists two virtual processors. In this way, an application core can be switched between the two modes, i.e., an ordinary mode and a safety monitoring mode. With such structure, it may be avoided that the data is released from a reliable core area (i.e., the safe execution environment) to a less reliable area (i.e., the ordinary execution environment). Since the switch between different core areas is usually totally uncorrelated with other functions of the processor, respective areas may operate independently while using the same core. A typical application of the Trustzone technology is to execute an operation system completely in an environment lack of security and have less security codes in the reliable environment.

Following approaches are applied in the Trustzone technology to ensure the security. All SoC hardware and software are isolated and located in two areas (i.e., an ordinary storage area and a safe storage area). A hardware logic in a bus structure supporting the Trustzone technology may ensure that components in the ordinary storage area cannot access resources in the safe storage area, so as to construct a powerful boundary between the two areas.

The use of the Trustzone technology in this embodiment will be described in detail in following embodiments.

In step 202, second user fingerprint information is collected during an authentication of a user identity.

In this step, an occasion for collecting the second user fingerprint information is the time when the server requires to acquire the user authentication information, and the occasion may be determined by the client according to the information acquired from the server. For example, during a payment period of a transaction, after the client acquires order information from the server, it may be determined that the payment information of the user is required to be acquired in next step. The occasion also may be determined by responding to a request from the server. For example, during the payment period of the transaction, after the client receives a request for acquiring the payment information from the server, it may be determined that the payment information of the user is required to be acquired in next step.

Similarly, in order to collect the second user fingerprint information, the fingerprint input interface as shown in Fig. 3 may be used. The collection of the second user fingerprint information may be implemented in the ordinary execution environment.

In step 203, the second user fingerprint information is matched with the first user fingerprint information in the safe storage area, and the user authentication information corresponding to the first user fingerprint information matched with the second user fingerprint information is determined.

In this step, a second fingerprint characteristic may be extracted from the second user fingerprint information, and the second fingerprint characteristic may be matched with the first fingerprint characteristic in the safe storage area. Since there is a one-to-one binding relationship in the safe storage area, the user authentication information corresponding to the first fingerprint characteristic matched with the second fingerprint characteristic may be determined.

For purpose of security, the extraction of the second fingerprint characteristic and the matching involved in this step may be implemented in the safe execution environment.

In step 204, the user authentication information is sent to a server to authenticate the user identity.

If the user authentication information is encrypted, the client may first decrypt the user authentication information and then sends the decrypted user authentication information to the server. Furthermore, the client may encrypt the decrypted user authentication information by a prearranged method with the server. After receiving the user authentication information, the server authenticates the user identity with the user authentication information.

The processing in this step may be implemented in the ordinary execution environment.

It may be seen that, the above process flow involved in the present disclosure does not refer to any change for the server, which may perfectly adapt to a conventional server.

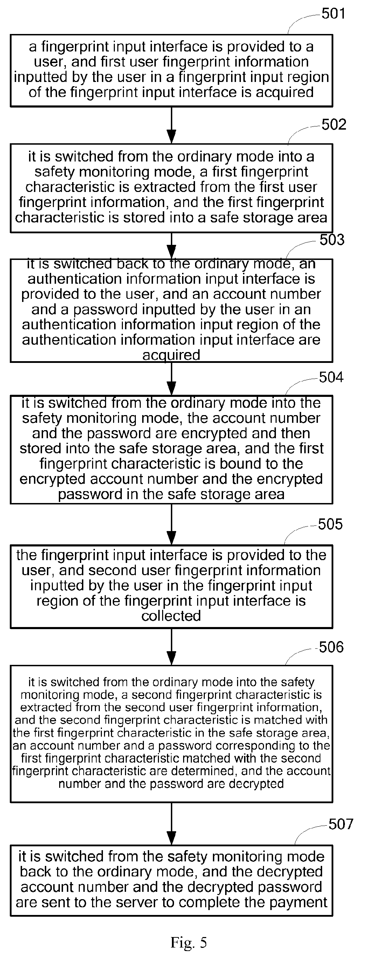

The method provided by the present disclosure will be described in detail below with reference to Fig. 5 and by taking a fingerprint payment for example. A premise of the embodiment of the present disclosure is that, a smart terminal is divided into an ordinary execution environment and a safe execution environment in advance by the Trustzone technology, and a safe storage area is established in the safe execution environment. A process flow of the method may include two periods, one is a binding period, and the other is a payment period. The binding period includes step 501 to step 504, and the payment period includes step 505 to step 507. The binding period is executed in advance, but the user may modify a binding relationship by executing step 501 to step 504 again in successive procedure. As shown in Fig. 5, the process flow may specifically include following steps.

In step 501, a fingerprint input interface is provided to a user, and first user fingerprint information inputted by the user in a fingerprint input region of the fingerprint input interface is acquired.

In a normal case, the smart terminal is in an ordinary mode, in this step the client is in the ordinary mode and provides a fingerprint input interface to the user so as to acquire the first user fingerprint information in an ordinary execution environment.

In step 502, it is switched from the ordinary mode into a safety monitoring mode, a first fingerprint characteristic is extracted from the first user fingerprint information, and the first fingerprint characteristic is stored into a safe storage area.

In this step, a fingerprint characteristic vector is extracted from the first user fingerprint information, and the fingerprint characteristic vector is stored into the safe storage area. In order to ensure the security, the extraction and storage operations as described above are performed in the safe execution environment, after it is switched into the safety monitoring mode.

The first user fingerprint information is sent into the safe execution environment via SPI (Serial Peripheral Interface) or other serial ports, that is, context information is stored into a register, and then it is switched into the safety monitoring mode via an SMI (Security Monitoring Interrupt) or SMC (Security Monitoring Call) instruction in the Trustzone technology, the context information is read from the register, an API (Application Programming Interface) provided by Trustzone technology is called, the first fingerprint characteristic is extracted from the first user fingerprint information, and the first fingerprint characteristic is stored into the safe storage area.

In step 503, it is switched back to the ordinary mode, an authentication information input interface is provided to the user, and an account number and a password inputted by the user in an authentication information input region of the authentication information input interface are acquired.

Similarly, it is switched from the safety monitoring mode back to the ordinary mode via the SMI or SMC instruction, so as to implement the switch from the safe execution environment to the ordinary execution environment.

In step 504, it is switched from the ordinary mode into the safety monitoring mode, the account number and the password are encrypted and then stored into the safe storage area, and the first fingerprint characteristic is bound to the encrypted account number and password in the safe storage area.

The account number and the password may be sent into the safe execution environment via SPI or other serial ports, that is, context information is stored into a register, and then it is switched into the safety monitoring mode via an interrupt instruction or an SMC instruction in the Trustzone technology, the context information is read from the register, an API provided by Trustzone technology is called to encrypt the account number and the password and then store the encrypted account number and encrypted password into the safe storage area, and the first fingerprint characteristic is bound to the encrypted account number and password in the safe storage area.

So far, a process flow of the binding period is terminated, and it is switched back to the ordinary mode.

When an order is established during a transaction, the client may receive order information from the server, and enter a payment interface, at this moment the step 505 is executed, that is, the fingerprint input interface is provided to the user, and second user fingerprint information inputted by the user in the fingerprint input region of the fingerprint input interface is collected.

In step 506, it is switched from the ordinary mode into the safety monitoring mode, a second fingerprint characteristic is extracted from the second user fingerprint information, and the second fingerprint characteristic is matched with the first fingerprint characteristic in the safe storage area. An account number and a password corresponding to the first fingerprint characteristic matched with the second fingerprint characteristic are determined, and the account number and the password are decrypted.

In this step, the second user fingerprint information is sent into the safe execution environment via SPI or other serial ports, that is, context information is stored into a register, and then it is switched into the safety monitoring mode via an interrupt instruction or an SMC instruction, the context information is read from the register, an API provided by the Trustzone technology is called to execute the extraction, matching and decryption operations.

In step 507, it is switched from the safety monitoring mode back to the ordinary mode, and the decrypted account number and the decrypted password are sent to the server to complete the payment.

In this step, the client may use a secret key and an encryption method prearranged with the server to re-encrypt the account number and the decrypted password, and then send the re-encrypted account number and the re-encrypted password to the server. The order may be paid at the server with the account number and the password received. Actually, a payment identity of the user is authenticated by using the account number and the password. If the account number and the password are successfully authenticated, then a response indicating a successful payment will be returned to the client, or else a response indicating a failed payment will be returned to the client.

Besides the acquirement manner and form of the user authentication information shown in step 503 and step 504, the user authentication information may also be acquired from the server. For example, the server has authenticated the account number and the password inputted by the user earlier, and a random series which identifies the user uniquely may be generated for the user. After acquiring the random series, the client uses the random series as the user authentication information, after it is switched from the ordinary mode into the safety monitoring mode, the random series is stored into the safe storage area in the safe execution environment, and the first fingerprint characteristic is bound to the random series. Then, the random series is obtained by matching in step 506, and the random series is sent to the server for the payment without password.

The method according to embodiments of the present disclosure has been described in detail above, and an apparatus according to embodiments of the present disclosure will be described in detail below.

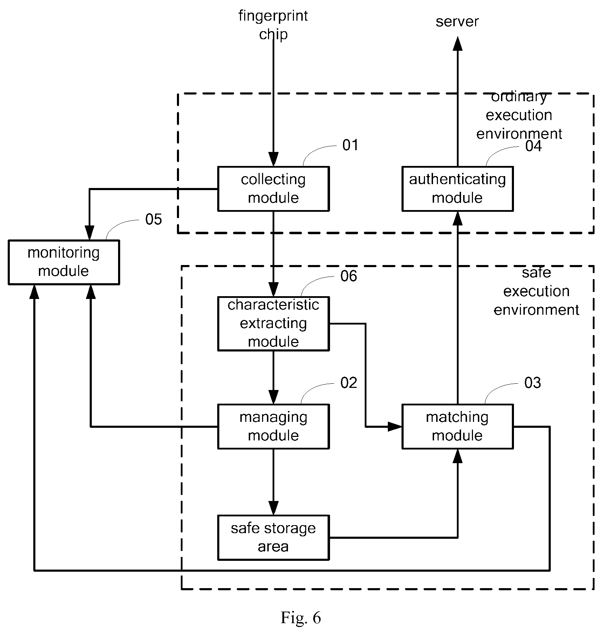

Fig. 6 is a block diagram of an apparatus according to an embodiment of the present disclosure. The apparatus is disposed in a smart terminal. As shown in Fig. 6, the apparatus may include: a collecting module 01, a managing module 02, a matching module 03 and an authenticating module 04. The apparatus may further include a monitoring module 05 and a characteristic extracting module 06.

The collecting module 01 is configured to collect first user fingerprint information and user authentication information and provide the first user fingerprint information and the user authentication information to the managing module 02 during a binding period. The managing module 02 is configured to store a binding relationship between the first user fingerprint information and the user authentication information provided by the collecting module 01 into a safe storage area of the smart terminal during the binding period.

The collecting module 01 is configured to collect second user fingerprint information and provide the second user fingerprint information to the matching module 03 during an authenticating period. The matching module 03 is configured to match the second user fingerprint information provided by the collecting module 01 with the first user fingerprint information in the safe storage area, to determine the user authentication information corresponding to the first user fingerprint information matched with the second user fingerprint information, and to provide the user authentication information to the authenticating module 04. The authenticating module 04 is configured to send the user authentication information provided by the matching module 03 to a server to authenticate a user identity.

The collecting module 01 described above may acquire the first user fingerprint information and the second user fingerprint information via a fingerprint sensor embedded in the smart terminal, and the fingerprint sensor may be a chip, such as an optical chip, a thermalsense chip, a capacitance chip, a piezoelectric capacitance chip, a piezoelectric resistance chip or the like.

In order to ensure the security of information storage, the smart terminal may be divided into an ordinary execution environment and a safe execution environment with the Trustzone technology or the like, and the safe storage area is established in the safe execution environment. The user identity authentication may be a user payment information authentication. In this case, the user authentication information is payment information including at least one of an account number and a password, or including a random series generated by the server for a user. The collecting module 01 is configured to collect the second user fingerprint information after acquiring order information from the server-side or after receiving a request for acquiring the payment information from the server during the authenticating period.

A switch between two modes (i.e., an ordinary mode and a safety monitoring mode) is involved in the Trustzone technology. The smart terminal works in the ordinary execution environment in the ordinary mode, and works in the safe execution environment in the safety monitoring mode. The switch between the two modes is executed by the monitoring module 05.

Specifically, during the binding period there are two manners below may be used.

Manner One: the monitoring module 05 is configured to switch the apparatus from the ordinary mode to the safety monitoring mode after the collecting module 01 collects the first user fingerprint information during the binding period; the managing module 02 is configured to store the first user fingerprint information into the safe storage area in the safe execution environment, and to trigger the monitoring module 05; the monitoring module 05 is configured to switch the apparatus back to the ordinary mode after receiving a trigger from the managing module 02; the monitoring module 05 is configured to switch the apparatus from the ordinary mode to the safety monitoring mode after the collecting module 01 collects the user authentication information; the managing module 02 is configured to store the user authentication information into the safe storage area in the safe execution environment, to bind the first user fingerprint information to the user authentication information, and to trigger the monitoring module 05; the monitoring module 05 is configured to switch the apparatus back to the ordinary mode after receiving a trigger from the managing module 02.

Manner Two: the monitoring module 05 is configured to switch the apparatus from the ordinary mode to the safety monitoring mode after the collecting module 01 collects the user authentication information during the binding period; the managing module 02 is configured to store the user authentication information into the safe storage area in the safe execution environment, and to trigger the monitoring module 05; the monitoring module 05 is configured to switch the apparatus back to the ordinary mode after receiving a trigger from the managing module 02; the monitoring module 05 is configured to switch the apparatus from the ordinary mode to the safety monitoring mode after the collecting module 01 collects the first user fingerprint information; the managing module 02 is configured to store the first user fingerprint information into the safe storage area in the safe execution environment, to bind the first user fingerprint information to the user authentication information, and to trigger the monitoring module 05.

For the authenticating period, the monitoring module 05 is configured to switch the apparatus from the ordinary mode to the safety monitoring mode after the collecting module 01 collects the second user fingerprint information; the matching module 03 is configured to trigger the monitoring module 05 after executing a matching operation in the safe execution environment; the monitoring module 05 is configured to switch the apparatus from the safety monitoring mode back to the ordinary mode after receiving a trigger from the matching module 03; the authenticating module 04 is configured to send the user authentication information provided by the matching module 03 to the server in the ordinary execution environment.

The monitoring module 05 may perform the switch between the ordinary mode and the safety monitoring mode by an SMI or SMC instruction provided by the Trustzone technology.

The collecting module 01 may provide a fingerprint input interface to the user and acquire the first user fingerprint information when collecting the first user fingerprint information, may provide the fingerprint input interface to the user and acquire the second user fingerprint information via the fingerprint input interface when collecting the second user fingerprint information as shown in Fig. 3. The collecting module 01 may provide an authentication information input interface to the user and acquire the user authentication information via the authentication information input interface when acquiring the user authentication information, as shown in Fig. 4.

More specifically, the characteristic extracting module 06 may extract a first fingerprint characteristic from the first user fingerprint information collected by the collecting module and extract a second fingerprint characteristic from the second user fingerprint information collected by the collecting module, and provide the first fingerprint characteristic to the managing module 02 and provide the second fingerprint characteristic to the matching module 03. When executing a binding operation, the managing module 02 actually stores the first fingerprint characteristic provided by the characteristic extracting module 06 into the safe storage area, and binds the first fingerprint characteristic to the user authentication information. In other words, the binding relationship in the safe storage area may refer to a binding relationship between the first fingerprint characteristic and the user authentication information. When executing the matching operation, the matching module 03 matches the second fingerprint characteristic provided by the characteristic extracting module 06 with the first fingerprint characteristic in the safe storage area, and determines the user authentication information corresponding to the first fingerprint characteristic matched with the second fingerprint characteristic.

In order to further ensure the security, the managing module 02 may be further configured to encrypt the user authentication information, before the user authentication information is stored into the safe storage area. Accordingly, the matching module 03 is further configured to decrypt the user authentication information, after the user authentication information corresponding to the first user fingerprint information matched with the second user fingerprint information is determined.

The client in a mobile terminal usually runs in the ordinary execution environment. In an application scene such as a fingerprint payment, a payment client runs in the ordinary execution environment, while the collecting module 01 and the authenticating module 04 may be disposed in the payment client. Each of the managing module 02, the matching module 03, the monitoring module 05 and the characteristic extracting module 06 is disposed in the safe execution environment, and is called by the client via an API provided by a Trustzone technology.

It may be seen from above description that, the method and the apparatus provided by the present disclosure may have following advantages.
(1) By binding the user fingerprint information to the user authentication information, it may complete the authentication of the user identity by only inputting the fingerprint information of the user during the authentication period, without inputting the authentication information manually, thus simplifying the user operation. In addition, since the binding relationship is stored in the safe storage area of the terminal, the binding relationship cannot be acquired easily and freely, thus improving the security.
(2) The present disclosure uses the Trustzone technology or the like to divide the smart terminal into the ordinary execution environment and the safe execution environment, operations such as the extraction and storage of the fingerprint characteristic, the encryption and storage of the user authentication information, the binding, the matching of the fingerprint characteristic are implemented in the safe execution environment, thus ensuring the security of the authentication process in the smart terminal. Therefore, the present disclosure may be applied in a scene with high security requirement, such as payment authentication.
(3) Both the extraction and the identification of the fingerprint characteristic are performed in the safe execution environment in local, thus avoiding a network consumption and a hidden risk caused by uploading the fingerprint information to the server.

It should be understood that, in the embodiments provided by the present disclosure, the apparatus and the method disclosed may be implemented via other manners. For example, the apparatus embodiment described above is exemplary, e.g., the division for the modules is only a logic function division, and there may be other division manners in practice.

The module illustrated as a separated component may be or may not be a separated one physically, the component shown as a module may be or may not be a physical unit, that is, it may be located at one place, or may be distributed in a plurality of network units. It may select a part of or all of units therein to realize the purpose of the present disclosure according to practice.

In addition, each functional unit in the present disclosure may be integrated in one progressing unit, or each functional unit exists as an independent unit, or two or more functional units may be integrated in one module. The integrated unit can be embodied in hardware, or hardware with software.

The integrated unit embodied in software can be stored in the computer readable storage medium. The software functional unit stores in one storage medium, including instructions for causing one computer apparatus (which may be a personal computer, a server, or a network apparatus) or a processor to execute a partial steps of the method according to each embodiment of the present disclosure. The storage medium described above includes various mediums which may store program codes, such as, a USB, a mobile hard disk, read-only memory (ROM), a random access memory (RAM), a magnetic disk, or an optical disk.

Although preferred embodiments have been shown and described above, it would be appreciated that the above embodiments cannot be construed to limit the present disclosure, and any change, alternative, and modification made without departing from spirit and principles of the present disclosure should be included in the scope of the present disclosure.

## Claims

1. A method of authenticating a fingerprint, wherein a binding relationship between first user fingerprint information and user authentication information is pre-stored into a safe storage area of a smart terminal and the method comprises:
collecting second user fingerprint information during an authentication of a user identity;
matching the second user fingerprint information with the first user fingerprint information in the safe storage area and determining the user authentication information corresponding to the first user fingerprint information matched with the second user fingerprint information; and
sending the user authentication information to a server to authenticate the user identity.

2. The method according to claim 1, wherein the user authentication information is payment information, the payment information comprises at least one of an account number and a password, or the payment information comprises a random series generated by the server for a user; and
collecting second user fingerprint information during an authentication of a user identity, comprises: collecting the second user fingerprint information after acquiring order information from the server or after receiving a request for acquiring the payment information from the server.

3. The method according to claim 1 or 2, wherein the smart terminal is divided into an ordinary execution environment and a safe execution environment, and the safe storage area is established in the safe execution environment.

4. The method according to claim 3, wherein a binding relationship between user fingerprint information and user authentication information is pre-stored into a safe storage area of a smart terminal by steps of:
acquiring the first user fingerprint information, switching from an ordinary mode to a safety monitoring mode, storing the first user fingerprint information into the safe storage area in the safe execution environment, and switching back to the ordinary mode; and acquiring the user authentication information, switching from the ordinary mode to the safety monitoring mode, storing the user authentication information into the safe storage area in the safe execution environment and binding the first user fingerprint information to the user authentication information; or
acquiring the user authentication information, switching from an ordinary mode to a safety monitoring mode, storing the user authentication information into the safe storage area in the safe execution environment, and switching back to the ordinary mode; acquiring the first user fingerprint information, switching from the ordinary mode to the safe monitoring mode, storing the first user fingerprint information into the safe storage area in the safe execution environment and binding the first user fingerprint information to the user authentication information.

5. The method according to claim 4, after collecting second user fingerprint information during an authentication of a user identity, further comprising:
switching from the ordinary mode to the safety monitoring mode, and in the safe execution environment, matching the second user fingerprint information with the first user fingerprint information in the safe storage area and determining the user authentication information corresponding to the first user fingerprint information matched with the second user fingerprint information; and
switching from the safety monitoring mode back to the ordinary mode, and sending the user authentication information to the server in the ordinary execution environment.

6. The method according to claim 4, wherein, a fingerprint input interface is provided to the user and the first user fingerprint information is acquired via the fingerprint input interface when acquiring the first user fingerprint information, and the fingerprint input interface is provided to the user and the second user fingerprint information is acquired via the fingerprint input interface when collecting the second user fingerprint information; and
when acquiring the user authentication information, an authentication information input interface is provided to the user and the user authentication information is acquired via the authentication information input interface.

7. The method according to claim 5, wherein storing the first user fingerprint information into the safe storage area comprises: extracting a first fingerprint characteristic from the first user fingerprint information, and storing the first fingerprint characteristic into the safe storage area;
binding the first user fingerprint information to the user authentication information comprises: binding the first fingerprint characteristic to the user authentication information; and
matching the second user fingerprint information with the first user fingerprint information in the safe storage area comprises: extracting a second fingerprint characteristic from the second user fingerprint information, and matching the second fingerprint characteristic with the first fingerprint characteristic in the safe storage area.

8. The method according to claim 5, wherein the user authentication information is encrypted to obtain encrypted user authentication information before the user authentication information is stored into the safe storage area; and
the encrypted user authentication information is decrypted after the encrypted user authentication information corresponding to the first user fingerprint information matched with the second user fingerprint information is determined.

9. The method according to claim 5, wherein steps executed in the safe execution environment are implemented by calling an application programming interface provided by a Trustzone technology.

10. An apparatus for authenticating a fingerprint, comprising: a collecting module, a managing module, a matching module and an authenticating module; wherein
the collecting module is configured to:
collect first user fingerprint information and user authentication information and provide the first user fingerprint information and the user authentication information to the managing module during a binding period;
collect second user fingerprint information and provide the second user fingerprint information to the matching module during an authenticating period;
the managing module is configured to store a binding relationship between the first user fingerprint information and the user authentication information provided by the collecting module into a safe storage area of a smart terminal during the binding period;
the matching module is configured to match the second user fingerprint information provided by the collecting module with the first user fingerprint information in the safe storage area, to determine the user authentication information corresponding to the first user fingerprint information matched with the second user fingerprint information, and to provide the user authentication information to the authenticating module; and
the authenticating module is configured to send the user authentication information provided by the matching module to a server to authenticate a user identity.

11. The apparatus according to claim 10, wherein the user authentication information is payment information, the payment information comprises at least one of an account number and a password, or the payment information comprises a random series generated by the server for a user;
the collecting module is configured to collect the second user fingerprint information after acquiring order information from the server or after receiving a request for acquiring the payment information from the server, during the authenticating period; and
the collecting module and the authenticating module are disposed in a payment client.

12. The apparatus according to claim 10 or 11, wherein the smart terminal is divided into an ordinary execution environment and a safe execution environment, and the safe storage area is established in the safe execution environment.

13. The apparatus according to claim 12, further comprising a monitoring module; wherein
the monitoring module is configured to switch the apparatus from an ordinary mode to a safety monitoring mode after the collecting module collects the first user fingerprint information during the binding period; to switch the apparatus back to the ordinary mode after receiving a trigger from the managing module; and to switch the apparatus from the ordinary mode to the safety monitoring mode after the collecting module collects the user authentication information; and
the managing module is configured to store the first user fingerprint information into the safe storage area in the safe execution environment, to trigger the monitoring module; to store the user authentication information into the safe storage area in the safe execution environment, to bind the first user fingerprint information to the user authentication information, and to trigger the monitoring module;
or
the monitoring module is configured to switch the apparatus from an ordinary mode to a safety monitoring mode after the collecting module collects the user authentication information during the binding period; to switch the apparatus back to the ordinary mode after receiving a trigger from the managing module; and to switch the apparatus from the ordinary mode to the safety monitoring mode after the collecting module collects the first user fingerprint information; and
the managing module is configured to store the user authentication information into the safe storage area in the safe execution environment, to trigger the monitoring module; to store the first user fingerprint information into the safe storage area in the safe execution environment, to bind the first user fingerprint information to the user authentication information, and to trigger the monitoring module.

14. The apparatus according to claim 13, wherein the monitoring module is further configured to switch the apparatus from the ordinary mode to the safety monitoring mode after the collecting module collects the second user fingerprint information during the authenticating period; and to switch the apparatus from the safety monitoring mode back to the ordinary mode after receiving a trigger from the matching module;
the matching module is further configured to trigger the monitoring module after matching the second user fingerprint information with the first user fingerprint information in the safe storage area in the safe execution environment; and
the authenticating module is further configured to send the user authentication information provided by the matching module to the server in the ordinary execution environment.

15. The apparatus according to claim 13, wherein the collecting module is configured to:
provide a fingerprint input interface to the user and to acquire the first user fingerprint information via the fingerprint input interface when collecting the first user fingerprint information;
provide the fingerprint input interface to the user and to acquire the second user fingerprint information via the fingerprint input interface when collecting the second user fingerprint information; and
provide an authentication information input interface to the user and to acquire the user authentication information via the authentication information input interface, when acquiring the user authentication information.

16. The apparatus according to claim 14, further comprising a characteristic extracting module, configured to extract a first fingerprint characteristic from the first user fingerprint information collected by the collecting module and extract a second fingerprint characteristic from the second user fingerprint information collected by the collecting module, and to provide the first fingerprint characteristic to the managing module and provide the second fingerprint characteristic to the matching module;
wherein the managing module is configured to bind the first user fingerprint information to the user authentication information by steps of: storing the first fingerprint characteristic provided by the characteristic extracting module into the safe storage area, and binding the first fingerprint characteristic to the user authentication information;
wherein the matching module is configured to match the second user fingerprint information with the first user fingerprint information in the safe storage area by steps of: matching the second fingerprint characteristic provided by the characteristic extracting module with the first fingerprint characteristic in the safe storage area, and determining the user authentication information corresponding to the first fingerprint characteristic matched with the second fingerprint characteristic.

17. The apparatus according to claim 14, the managing module is further configured to encrypt the user authentication information, before the user authentication information is stored into the safe storage area; and
the matching module is further configured to decrypt the user authentication information, after the user authentication information corresponding to the first user fingerprint information matched with the second user fingerprint information is determined.

18. The apparatus according to claim 14, wherein each of the monitoring module, the managing module and the matching module is disposed in the safe execution environment, and is called by the client via an application programming interface provided by a Trustzone technology.

19. A smart terminal, comprising:
one or more processors;
a memory having one or more programs stored therein;
wherein when executed by the one or more processors, the one or more programs cause the one or more processors to:
collect second user fingerprint information during an authentication of a user identity;
match the second user fingerprint information with first user fingerprint information in a safe storage area of a smart terminal and determine user authentication information corresponding to the first user fingerprint information matched with the second user fingerprint information; and
send the user authentication information to a server to authenticate the user identity;
wherein a binding relationship between the first user fingerprint information and the user authentication information is pre-stored in the safe storage area.

20. A non-transitory computer storage medium having one or more programs stored therein, wherein when executed by a smart terminal, the one or more programs cause the terminal to:
collect second user fingerprint information during an authentication of a user identity;
match the second user fingerprint information with first user fingerprint information in a safe storage area of the smart terminal and determine user authentication information corresponding to the first user fingerprint information matched with the second user fingerprint information; and
send the user authentication information to a server to authenticate the user identity;
wherein a binding relationship between the first user fingerprint information and the user authentication information is pre-stored in the safe storage area.
